# EUROPÄISCHE PATENTANMELDUNG

(11) **EP 3 085 498 A1**
(43) Veröffentlichungstag der Anmeldung: **26.10.2016**
(21) Anmeldenummer: 15165009.0
(22) Anmeldetag: 24.04.2015
(51) Int. Cl.: B25F 5/00

(54) **HANDWERKZEUGMASCHINE**

(71) Anmelder: HILTI Aktiengesellschaft, 9494 Schaan (LI)
(72) Erfinder: Meixner, Ralf, 87656 Germaringen (DE); Hunger, Markus, 86161 Augsburg (DE); Jakob, Manfred, 86916 Kaufering (DE)
(74) Vertreter: Hilti Aktiengesellschaft Corporate Intellectual Property

(57) **Zusammenfassung**

Handwerkzeugmaschine, insbesondere Bohrhammer oder Kombihammer, mit einem Werkzeugehäuse, das einen zur Aufnahme eines Werkzeugakkus ausgebildeten Aufnahmebereich (80) aufweist, wobei in dem Aufnahmebereich (80) ein Kontaktbereich (85) zum elektrischen Kontaktieren des Werkzeugakkus sowie ein elektrisch mit dem Kontaktbereich (85) verbundener Anschlussbereich (87) vorgesehen ist, wobei der Anschlussbereich (87) zum Weiterleiten eines durch den Werkzeugakku bereitgestellten Versorgungsstroms an einen elektrischen Antriebsmotor der Handwerkzeugmaschine (100) eingerichtet ist, wobei die Handwerkzeugmaschine (100) einen im Werkzeugehäuse (90) angeordneten und durch den elektrischen Antriebsmotor betriebenen Kühlungslüfter aufweist mittels dem Kühlungsluft (L) zwecks Kühlung des Aufnahmebereichs (80) durch den Aufnahmebereich (80) hindurch angesaugt werden kann, wobei im Aufnahmebereich (80) wenigstens ein Abschottungselement (91) derart vorgesehen ist, dass der Kontaktbereich (85) im Wesentlichen frei von durch den Aufnahmebereich (80) hindurch angesaugter Kühlungsluft (L) verbleibt.

## Beschreibung

Die vorliegende Erfindung betrifft eine Handwerkzeugmaschine, insbesondere Bohrhammer oder Kombihammer, mit einem Werkzeuggehäuse, das einen zur Aufnahme eines Werkzeugakkus ausgebildeten Aufnahmebereich aufweist. In dem Aufnahmebereich ist ein Kontaktbereich zum elektrischen Kontaktieren des Werkzeugakkus sowie ein elektrisch mit dem Kontaktbereich verbundener Anschlussbereich vorgesehen. Der Anschlussbereich ist zum Weiterleiten eines durch den Werkzeugakku bereitgestellten Versorgungsstroms an einen elektrischen Antriebsmotor der Handwerkzeugmaschine eingerichtet. Die Handwerkzeugmaschine weist ferner einen im Werkzeuggehäuse angeordneten und durch den elektrischen Antriebsmotor betriebenen Kühlungslüfter auf, mittels dessen Kühlungsluft zwecks Kühlung des Aufnahmebereichs durch den Aufnahmebereich hindurch angesaugt werden kann.

Insbesondere der Kontaktbereich zum elektrischen Kontaktieren des Werkzeugakkus kann sich bekannterweise durch den durch ihn hindurchfließenden Strom während des Betriebs der Handwerkzeugmaschine stark erhitzen und muss entsprechend gekühlt werden.

Es ist Aufgabe der vorliegenden Erfindung, eine Handwerkzeugmaschine bereitzustellen, die besonders verschleissarm ist. Die Aufgabe wird bei einer Handwerkzeugmaschine der eingangs genannten Art dadurch gelöst, dass im Aufnahmebereich wenigstens ein Abschottungselement derart vorgesehen ist, dass der Kontaktbereich im Wesentlichen frei von durch den Aufnahmebereich hindurch angesaugter Kühlungsluft verbleibt.

Die Erfindung schließt die Erkenntnis ein, dass Kühlungsluft typischerweise aus der unmittelbaren Umgebung einer Handwerkzeugmaschine angesaugt wird und diese Kühlungsluft häufig durch kleine Staub- und Dreckpartikel, wie sie typischerweise auf Baustellen auftreten, verschmutzt ist. Durch Ansaugen von staub- oder partikelhaltiger Kühlungsluft durch den Aufnahmebereich hindurch zwecks Kühlung des Aufnahmebereichs streicht Kühlungsluft nachteiligerweise auch am Kontaktbereich zum Werkzeugakku vorbei, wobei der Kontaktbereich schneller verschleißt.

Durch das erfindungsgemäße Abschottungselement verbleibt der Kontaktbereich nunmehr im Wesentlichen frei von angesaugter Kühlungsluft, sodass in der Kühlungsluft enthaltene Verschmutzungen oder etwa Feuchtigkeit keinen Verschleiß - bis hin zum Ausfall - des Kontaktbereichs verursachen kann. Erfindungsgemäß erfolgt demnach also eine Luftkühlung des Aufnahmebereichs mit Ausnahme wenigstens des Kontaktbereichs.

In einer bevorzugten Ausgestaltung ist das Abschottungselement als Trennwand, als flexible Dichtung oder als Kammer ausgebildet. Das Abschottungselement kann auch durch eine eingebrachte Menge Fett als Dichtelement realisiert sein. Besonders bevorzugt ist das Abschottungselement zwischen Kontaktbereich und dem Anschlussbereich vorgesehen. Somit kann eine effektive Wärmeabgabe über den Anschlussbereich erfolgen.

Es hat sich als vorteilhaft herausgestellt, wenn der Kontaktbereich und der Anschlussbereich miteinander wärmeleitend verbunden sind, sodass eine in den Kontaktbereich eingetragene Wärmemenge über den Anschlussbereich abgeführt werden kann. Da erfindungsgemäß keine Kühlungsluft den Kontaktbereich umströmt, kann dennoch eine effektive Wärmeableitung erfolgen.

Bevorzugt ist dem Anschlussbereich in Richtung Maschinenelektronik ein Wärmeleitelement nachgeschaltet, das mit dem Anschlussbereich wärmeleitend verbunden ist, sodass eine in den Anschlussbereich eingetragene Wärmemenge über das Wärmeleitelement abgeführt werden kann. Um eine Wärmeabfuhr über das Wärmeleitelement weiter zu verbessern, weist das Wärmeleitelement bevorzugt einen Kühlkörper auf, der zur Anströmung durch die Kühlungsluft zwecks Kühlung ausgebildet und entsprechend im Aufnahmebereich angeordnet ist.

Bevorzugt ist das Wärmeleitelement als stromführende Litze ausgebildet oder weist eine solche auf. Die stromführende Litze kann zumindest abschnittsweise von einer Isolierung umgeben sein. In einer alternativen bevorzugten Ausgestaltung sind der Kontaktbereich, der Anschlussbereich und das Wärmeelement zusammen als einteiliges Bauteil ausgebildet. Bevorzugt ist das einteilige Bauteil eine Kontaktschiene. Die Kontaktschiene kann beispielsweise aus Kupfer bestehen oder Kupfer aufweisen.

Bevorzugt weist der Anschlussbereich eine Crimpverbindung oder Schweissverbindung zur elektrischen und wärmeleitenden Verbindung des Wärmeelements mit dem Kontaktelement auf. Der Anschlussbereich kann seinerseits selbst durch eine Crimpverbindung oder Schweissverbindung gebildet sein.

Es hat sich als besonders vorteilhaft herausgestellt, wenn das Abschottungselement, bezogen auf die Längsachse des Kontaktbereichs, in einem Abstand von 2 - 10 mm von einem Kontaktpunkt des Kontaktbereichs oder in einem Abstand von 10 - 30 mm von dem Kontaktpunkt des Kontaktbereichs angeordnet ist. Als Kontaktbereich gilt bevorzugt derjenige Bereich, in den ein Akkukontakt eines bestimmungsgemäß an der Handwerkzeugmaschine angeschlossenen Werkzeugakkus eingreift.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine schematische Darstellung einer Handwerkzeugmaschine gemäß dem Stand der Technik;
- Fig. 2: eine schematische Darstellung eines Aufnahmebereichs einer erfindungsgemäßen Handwerkzeugmaschine;
- Fig. 3: eine schematische perspektivische Darstellung eines Aufnahmebereichs einer erfindungsgemäßen Handwerkzeugmaschine;
- Fig. 4: eine schematische Darstellung eines Kontaktbereichs, Anschlussbereichs sowie Wärmeleitelements zur Darstellung verschiedener möglicher Positionen des Abschottungselements;
- Fig. 5: eine schematische Darstellung eines Wärmeleitelements mit Kühlkörper;
- Fig. 6: eine als einteiliges Bauteil ausgebildete Einheit aus Kontaktbereich, Anschlussbereich und Wärmeleitelement.

### Ausführungsbeispiele:

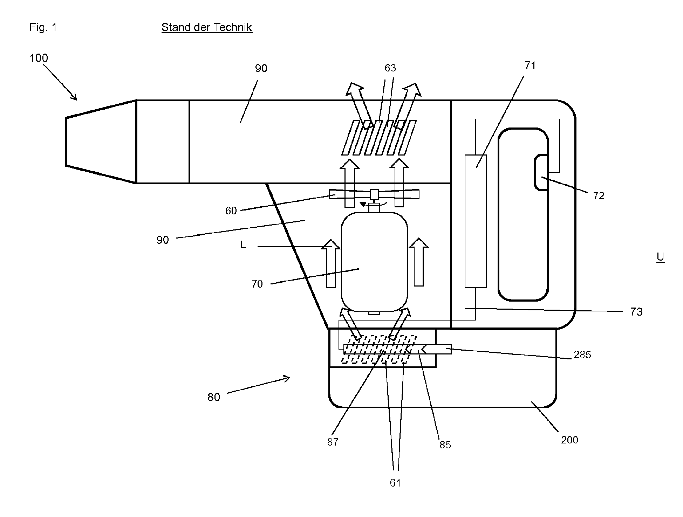

Fig. 1 zeigt eine Handwerkzeugmaschine 100 gemäß dem Stand der Technik, vorliegend einen Bohrhammer. Die Handwerkzeugmaschine 100 weist ein Werkzeuggehäuse 90 auf, das einen zur Aufnahme eines Werkzeugakkus 200 ausgebildeten Aufnahmebereich 80 aufweist. In dem Aufnahmebereich 80 ist ein Kontaktbereich 85 zum elektrischen Kontaktieren des Werkzeugakkus 200 über dessen Akkukontakt 285 angeordnet. Des Weiteren ist im Aufnahmebereich 80 ein Anschlussbereich 87 zum Weiterleiten eines durch den Werkzeugakku 200 bereitgestellten Versorgungsstroms an einen elektrischen Antriebsmotor 70 angeordnet. Der elektrische Antriebsmotor 70 ist von der Handwerkzeugmaschine 100 umfasst.

Weiterhin weist die Handwerkzeugmaschine 100 einen im Werkzeuggehäuse 90 angeordneten und durch den elektrischen Antriebsmotor 70 betriebenen Kühlungslüfter 60 auf. Mittels des Kühlungslüfters 60 kann Kühlungsluft L aus der Umgebung U zwecks Kühlung des Aufnahmebereichs 80 durch den Aufnahmebereich 80 hindurch angesaugt werden. Dabei wird Kühlungsluft L, bewirkt durch den Kühlungslüfter 60, durch den Lufteinlass 61 in den Aufnahmebereich 80 eingesaugt, um dort Abwärme des Anschlussbereichs 27 beziehungsweise des Kontaktbereichs 85 aufzunehmen. Die Kühlungsluft L tritt anschließend am Luftauslass 63 aus dem Werkzeuggehäuse 90 aus.

Wie ebenfalls der Fig. 1 entnommen werden kann, ist der Kontaktbereich 85 elektrisch mit dem Anschlussbereich 87 verbunden, welcher wiederum über die Anschlussleitung 73 mit einer Maschinenelektronik 71 verbunden ist. Über einen Maschinenschalter 72 kann die Handwerkzeugmaschine 100 in Betrieb genommen werden.

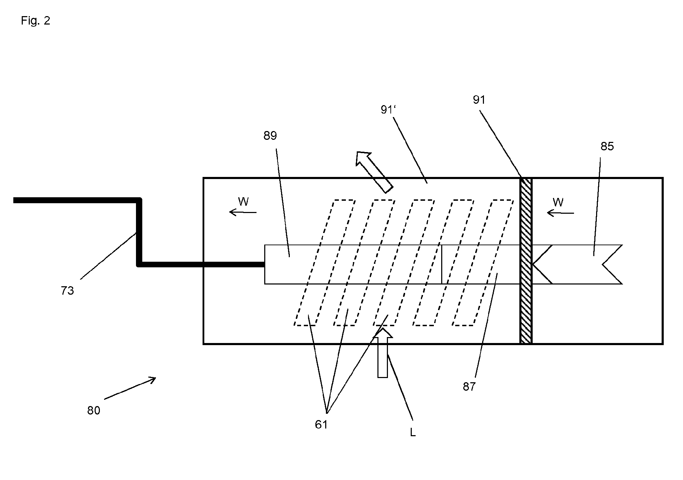

Fig. 2 zeigt eine vergrößerte Darstellung eines Aufnahmebereichs 80 einer erfindungsgemäßen Handwerkzeugmaschine 100. Im Gegensatz zu der mit Bezug auf Fig. 1 beschriebenen Handwerkzeugmaschine des Standes der Technik weist der Aufnahmebereich 80 in Fig. 2 ein Abschottungselement 91 in Form einer Trennwand auf, die derart vorgesehen ist, dass der Kontaktbereich 85 im Wesentlichen frei von durch den Aufnahmebereich 80 hindurch angesaugter Kühlungsluft verbleibt.

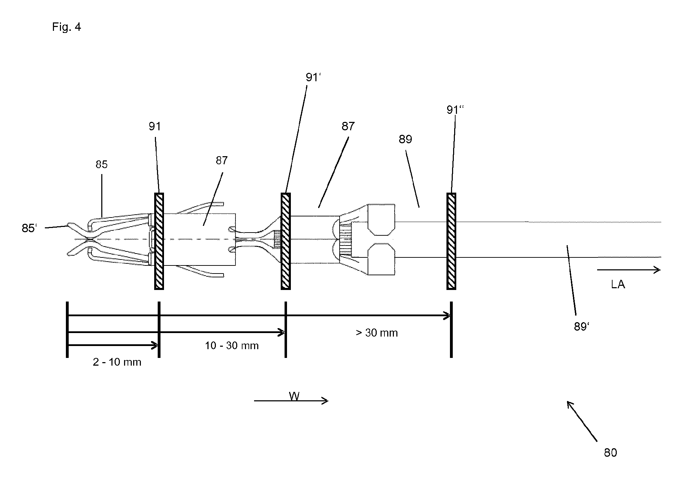

Im dargestellten Ausführungsbeispiel ist das Abschottungselement 91 zwischen Kontaktbereich 85 und dem Anschlussbereich 87 vorgesehen, sodass der Kontaktbereich 85 von dem Anschlussbereich 87 im Wesentlichen luftdicht abgeschottet ist. Alternativ mögliche Positionen des Abschottungselements 91 sind der Fig. 4 entnehmbar.

Dem Anschlussbereich 87 ist im vorliegenden Ausführungsbeispiel der Fig. 2 ein Wärmeleitelement 89 nachgeschaltet. Der Kontaktbereich 85, der Anschlussbereich 87 und das Wärmeleitelement 89 sind sowohl elektrisch als auch wärmeleitend miteinander verbunden. Somit kann zum einen ein durch einen Werkzeugakku (nicht gezeigt) bereitgestellter Versorgungsstrom in den Kontaktbereich 85 eintreten und von dort über den Anschlussbereich 87 und das Wärmeleitelement 89 in die Anschlussleitung 73 geführt werden. Ferner ist eine in den Kontaktbereich 85 eingetragene Wärmemenge W in den Anschlussbereich 87 und das Wärmeleitelement 89 abführbar, um von diesen durch den Kühlungsluftstrom L mittels Konvektion abtransportiert zu werden.

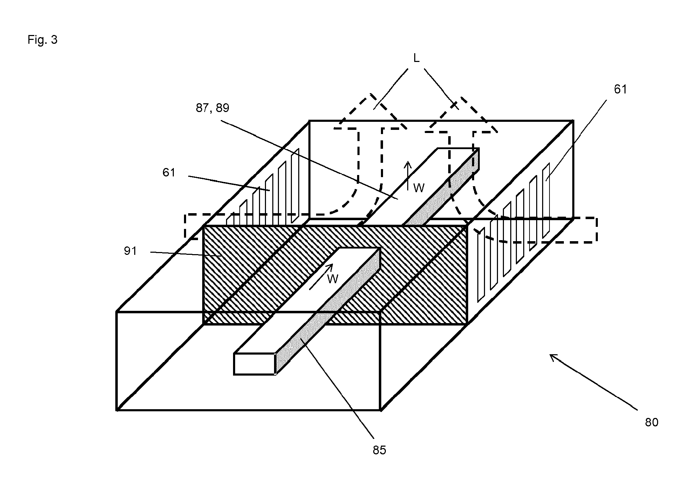

Fig. 3 zeigt eine perspektivische Darstellung eines Aufnahmebereichs 80. Gut erkennbar ist das Abschottungselement 91 als Trennwand zwischen Kontaktbereich 85 und Anschlussbereich 87 angeordnet. Die durch die Lufteinlässe 61 seitlich angesaugte Kühlungsluft dient der Abfuhr einer in den Kontaktbereich 85 eingetragenen und von dort in den Anschlussbereich 87 beziehungsweise das Wärmeelement 89 weitergeleiteten Wärmemenge W.

Fig. 4 dient der Darstellung möglicher Positionen, an denen ein Abschottungselement 91 innerhalb eines Aufnahmebereichs 80 angeordnet werden kann. Besonders bevorzugt ist das Abschottungselement 91 zwischen dem Kontaktbereich 85 und dem Anschlussbereich 87 angeordnet. Dabei ist das Abschottungselement 91, bezogen auf die Längsachse LA des Kontaktbereichs 85, in einem Abstand von 2 - 10 mm von einem Kontaktpunkt 85' des Kontaktbereichs angeordnet. Wie vorliegend der Fig. 4 entnommen werden kann, ist das Abschottungselement in Form einer Trennwand genau 10 mm entfernt vom Kontaktpunkt 85' in Richtung der Längsachse LA angeordnet.

Ein alternatives Abschottungselement 91' ist in einem Abstand von 10 - 30 mm von dem Kontaktpunkt 85' des Kontaktbereichs 85, bezogen auf die Längsachse LA des Kontaktbereichs 85, angeordnet. Im vorliegenden Fall ist das alternative Abschottungselement 91 genau 30 mm von dem Kontaktpunkt 85' beabstandet. Ist statt des Abschottungselements 91 ein alternatives Abschottungselement 91' vorgesehen, ist sowohl der Kontaktbereich 85 als auch der Anschlussbereich 87 frei von durch den Aufnahmebereich 80 hindurch angesaugter Kühlungsluft L. Dementsprechend erfolgt ein Wärmetransport vom Kontaktbereich 85 in den Anschlussbereich 87 und von dort in das Wärmeleitelement 89 mittels Wärmeleitung. Die Wärmemenge W wird anschließend durch Konvektion mittels Kühlungsluft L, die am Wärmeleitelement 89 vorbeiströmt, abtransportiert.

Ein weiteres alternatives Abschottungselement 91" ist in im Abstand von > 30 mm von dem Kontaktpunkt 85' des Kontaktbereichs 85, bezogen auf die Längsachse LA des Kontaktbereichs 85, angeordnet. Ist das zweite alternative Abschottungselement 91" statt des Abschottungselements 91 und des ersten alternativen Abschottungselements 91' vorgesehen, so kann ein Abtransport einer Wärmemenge mittels Konvektion nur noch über den verbleibenden Abschnitt 89' des Wärmeleitelements 89 erfolgen.

Wie aus Fig. 4 ebenfalls ersichtlich ist, ist der Kontaktbereich 85 vorliegend als Kontaktklemme ausgebildet, die über eine vom Anschlussbereich 87 umfasste Crimpverbindung mit dem Wärmeleitelement 89, 89' in Form einer isolierten Litze verbunden ist.

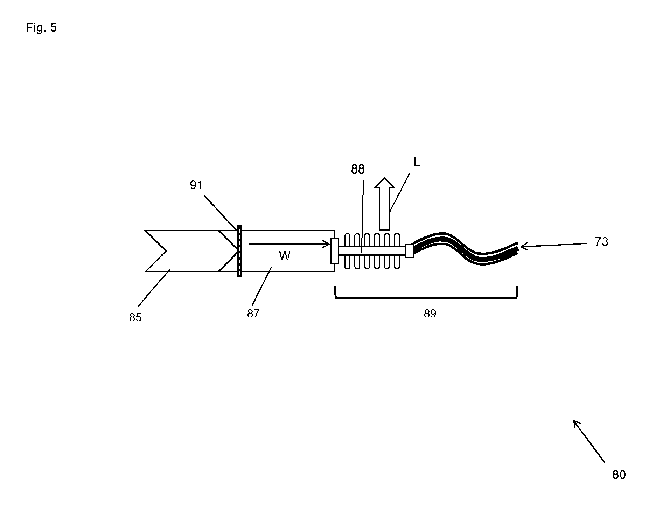

Fig. 5 zeigt einen Aufnahmebereich 80 einer erfindungsgemäßen Handwerkzeugmaschine 100. Das erfindungsgemäße Abschottungselement 91 ist als Trennwand zwischen Kontaktbereich 85 und dem Anschlussbereich 87 vorgesehen. Das dem Anschlussbereich 87 nachgeschaltete Wärmeleitelement 89 weist einen Kühlkörper 88 zur Anströmung durch Kühlungsluft L zwecks Kühlung auf. Das wärmeleitende Element 89 ist im vorliegenden Ausführungsbeispiel abschnittsweise durch eine isolierte Litze gebildet, die als Anschlussleitung 73 in Richtung einer nicht gezeigten Maschinenelektronik weiterverläuft. Über die Litze, die Teil des wärmeleitenden Elements 89 ist, kann ein Teil der in den Kontaktbereich 85 eingetragenen Wärmemenge abgeführt werden.

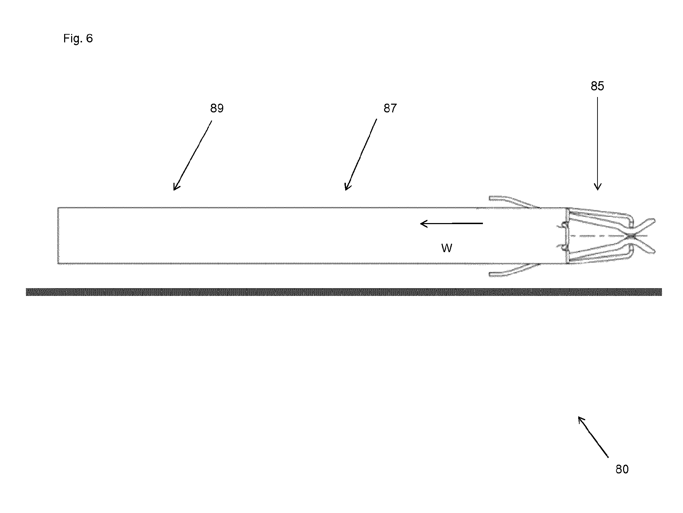

Fig. 6 zeigt schließlich ein Ausführungsbeispiel, bei dem der Kontaktbereich 85, der Anschlussbereich 87 und das Wärmeleitelement 89 zusammen als einteiliges Bauteil ausgebildet sind, vorliegend als Kontaktschiene. Beispielhaft ist die Kontaktschiene aus Kupfer gefertigt, sodass der Kontaktbereich 85, der Anschlussbereich 87 und das Wärmeleitelement 89 sowohl elektrisch als auch wärmeleitend miteinander verbunden sind. Somit wirkt die Kontaktschiene sowohl als elektrisches Verbindungselement als auch als Heatpipe.

### Bezugszeichenliste:

- L: Kühlungsluft
- LA: Längsachse des Kontaktbereichs
- W: Wärmemenge
- 60: Kühlungslüfter
- 61: Lufteinlass
- 63: Luftauslass
- 70: elektrischer Antriebsmotor
- 71: Maschinenelektronik
- 72: Maschinenschalter
- 73: Anschlussleitung
- 80: Aufnahmebereich
- 85: Kontaktbereich
- 87: Anschlussbereich
- 88: Kühlkörper
- 89: Wärmeleitelement
- 89': verbleibender Abschnitt des Wärmeleitelements
- 90: Werkzeuggehäuse
- 91: Abschottungselement
- 100: Werkzeugmaschine
- 200: Werkzeugakku
- 285: Akkukontakt

## Patentansprüche

1. Handwerkzeugmaschine (100), insbesondere Bohrhammer oder Kombihammer, mit einem Werkzeugehäuse (90), das einen zur Aufnahme eines Werkzeugakkus (200) ausgebildeten Aufnahmebereich (80) aufweist, wobei in dem Aufnahmebereich (80) ein Kontaktbereich (85) zum elektrischen Kontaktieren des Werkzeugakkus (200) sowie ein elektrisch mit dem Kontaktbereich (85) verbundener Anschlussbereich (87) vorgesehen ist, wobei der Anschlussbereich (87) zum Weiterleiten eines durch den Werkzeugakku (200) bereitgestellten Versorgungsstroms an einen elektrischen Antriebsmotor (70) der Handwerkzeugmaschine (100) eingerichtet ist, wobei die Handwerkzeugmaschine (100) einen im Werkzeugehäuse (90) angeordneten und durch den elektrischen Antriebsmotor (70) betriebenen Kühlungslüfter (60) aufweist mittels dem Kühlungsluft (L) zwecks Kühlung des Aufnahmebereichs (80) durch den Aufnahmebereich (80) hindurch angesaugt werden kann,
**dadurch gekennzeichnet, dass** im Aufnahmebereich (80) wenigstens ein Abschottungselement (91) derart vorgesehen ist, dass der Kontaktbereich (85) im Wesentlichen frei von durch den Aufnahmebereich (80) hindurch angesaugter Kühlungsluft (L) verbleibt.

2. Handwerkzeugmaschine (100) nach Anspruch 1,
**dadurch gekennzeichnet, dass** das Abschottungselement (91) als Trennwand, als flexible Dichtung oder als Kammer ausgebildet ist.

3. Handwerkzeugmaschine (100) nach Anspruch 1 oder 2,
**dadurch gekennzeichnet, dass** das Abschottungselement (91) zwischen Kontaktbereich (85) und dem Anschlussbereich (87) vorgesehen ist.

4. Handwerkzeugmaschine (100) nach einem der vorangehenden Ansprüche,
**dadurch gekennzeichnet, dass** der Kontaktbereich (85) und der Anschlussbereich (87) miteinander wärmeleitend verbunden sind, so dass eine in den Kontaktbereich (85) eingetragene Wärmemenge über den Anschlussbereich (87) abgeführt werden kann.

5. Handwerkzeugmaschine (100) nach einem der vorangehenden Ansprüche,
**dadurch gekennzeichnet, dass** der Anschlussbereich (87) in Richtung Maschinenelektronik (71) ein Wärmeleitelement (89) nachgeschaltet ist, das mit dem Anschlussbereich (87) wärmeleitend verbunden sind, so dass eine in den Anschlussbereich (87) eingetragene Wärmemenge über das Wärmeleitelement (89) abgeführt werden kann.

6. Handwerkzeugmaschine (100) nach Anspruch 5,
**dadurch gekennzeichnet, dass** das Wärmeleitelement (89) einen Kühlkörper (88) zur Anströmung durch Kühlungsluft (L) zwecks Kühlung aufweist.

7. Handwerkzeugmaschine (100) nach Anspruch 5 oder 6,
**dadurch gekennzeichnet, dass** das Wärmeleitelement (89) als stromführende Litze ausgebildet ist oder eine solche aufweist.

8. Handwerkzeugmaschine (100) nach Anspruch 5 oder 6,
**dadurch gekennzeichnet, dass** der Kontaktbereich (85), der Anschlussbereich (87) und das Wärmeleitelement (89) zusammen als einteiliges Bauteil ausgebildet sind, bevorzugt als Kontaktschiene.

9. Handwerkzeugmaschine (100) nach einem der Ansprüche 5 bis 7,
**dadurch gekennzeichnet, dass** der Anschlussbereich (87) eine Crimpverbindung oder Schweißverbindung zur elektrischen und wärmeleitenden Verbindung des Wärmeleitelements (89) mit dem Kontaktbereich (85) aufweist oder durch Crimpverbindung oder Schweißverbindung gebildet ist.

10. Handwerkzeugmaschine (100) nach einem der vorangehenden Ansprüche,
**dadurch gekennzeichnet, dass** das Abschottungselement (91), bezogen auf die Längsachse (LA) des Kontaktbereich (85), in einem Abstand von 2 - 10 mm von einem Kontaktpunkt (85') des Kontaktbereich (85) oder in einem Abstand von 10 - 30 mm von dem Kontaktpunkt (85') des Kontaktbereich (85) angeordnet ist.
